## Europäisches Patentamt

## European Patent Office

## Office européen des brevets

(19)

(11) Veröffentlichungsnummer: **0 242 435**
**B1**

(12)

# EUROPÄISCHE PATENTSCHRIFT

(45) Veröffentlichungstag der Patentschrift:
**17.01.90**

(51) Int. Cl.⁴: **B60C 27/06**

(21) Anmeldenummer: **86114216.4**

(22) Anmeldetag: **14.10.86**

(54) **Verschluss für öffenbare und verschliessbare Seitenbügel von Gleitschutzketten für Fahrzeugreifen.**

(30) Priorität: **18.04.86 DE 8610680 U**

(43) Veröffentlichungstag der Anmeldung:
**28.10.87 Patentblatt 87/44**

(45) Bekanntmachung des Hinweises auf die Patenterteilung:
**17.01.90 Patentblatt 90/3**

(84) Benannte Vertragsstaaten:
**AT BE CH DE ES FR GB LI NL SE**

(56) Entgegenhaltungen:
**EP-A- 0 116 676**
**US-A- 207 253**

(73) Patentinhaber: **ACCIAIERIE WEISSENFELS S.P.A.,
Tarvisio, I-33010 Fusine Valromana(IT)**

(72) Erfinder: **Gregorutti, Paolo, Dr.-Ing., I-33010 Fusine
Valromana (Tarvisio)(IT)**

(74) Vertreter: **Geyer, Werner, Dr.-Ing., Patentanwaltskanzlei
Dr. Werner Geyer Hermann-Vogel-Strasse 12,
D-8000 München 40(DE)**

**Beschreibung**

Die Erfindung bezieht sich auf einen Verschluß für öffenbare und verschließbare Seitenbügel von Gleitschutzketten für Fahrzeugreifen gemäß dem Oberbegriff des Anspruches 1.

Es ist eine Vielzahl von Verschlüssen für Seitenbügel von Gleitschutzketten bekannt, wobei der Aufbau der Verschlüsse teilweise auch von der eingesetzten Konstruktion der Gesamtkette bzw. des inneren Seitenbügels abhängt. So sind z.B. Spannverschlüsse bekannt, die von der Reifenaußenseite her bedienbar sind (Spannkettenverschlüsse). Bei solchen Verschlüssen wird zwar vermieden, daß die Bedienungsperson nach dem Auflegen der Kette zum Schließen des Verschlusses um den Fahrzeugreifen herumgreifen muß; andererseits weisen diese Verschlüsse jedoch den Nachteil auf, daß nach dem ersten Aufbringen und Anziehen das Fahrzeug (wenn auch nur wenig) vorwärtsbewegt werden muß, wonach dann ein Nachspannen des Verschlusses erforderlich ist.

Es sind aber auch andere Verschlüsse bekannt, die nicht von der Reifenaußenseite her bedient werden müssen und die im wesentlichen darin bestehen, daß zwei einzelne Endstücke vorgesehen sind, die in Verschlußstellung formschlüssig ineinander verhaken. In einfachster Ausgestaltung sieht dies so aus, daß das eine Endstück als Haken ausgebildet ist, wobei die Ebene, innerhalb derer die Hakenform ausgebildet ist, im wesentlichen parallel zur Aufspannebene des Seitenbügels gerichtet ist, während das andere Endstück als entsprechend geformte Öse vorliegt, die manuell in den Haken eingehängt werden kann. Daneben wurde aber auch schon vorgeschlagen, die Öse selbst als an der Reifenflanke anliegendes flächiges Element auszubilden und den Haken ebenfalls als flaches, aber senkrecht zur Ebene der Öse ausgebildetes Element vorzusehen. Diese bekannten Haken-Verschlüsse führen aber nur dann zu einer sicheren Verschließwirkung, wenn nicht die Öse beim Zusammenführen der beiden Elemente auf der Rückseite des Hakens liegt, da dann die gewünschte Verhakung nicht erfolgt, was bei unsachgemäßem oder unbedachtem Gebrauch durchaus eintreten kann.

Um diesen Nachteil abzustellen, wurde bereits ein Hakenverschluß (EP-A 116 676) vorgeschlagen, bei dem die beiden an den Enden des Seitenbügels befestigten Endstücke jeweils sowohl einen Haken, wie auch noch eine Einhaköffnung aufweisen, so daß es bei der Verschlußbewegung unerheblich ist, wie sich die beiden Endstücke relativ zueinander in Verschlußstellung überdecken. Da dieses Endstück sowohl die Funktion eines Hakens, wie auch die einer Einhaköffnung übernehmen kann, ist eine Verschlußwirkung stets gewährleistet, unabhängig davon, wie die beiden Endstücke relativ nebeneinander bei der Verschlußbewegung zur Anordnung kommen. Bei diesem bekannten Verschluß werden die Haken dadurch ausgebildet, daß der Grundkörper jedes Endstücks an seinem dem anderen Endstück zugewendeten Ende in Form eines Hakens derart umgebogen ist, daß beim Zusammenlaufen der beiden Endstücke während der Verschlußbewegung die zwei Haken mit ihren runden Vorderseiten gegeneinander anlaufen und dadurch eine seitliche Ablenkung der Haken derart erfolgt, daß anschließend die beiden Endstücke nebeneinanderliegend die restliche Verschlußbewegung weiter ausführen, bis das an der Reifenflanke liegende Endstück mit seinem Haken in die im danebenliegenden Endstück ausgebildete Einhaköffnung eingreift. Obgleich der bekannte Verschluß sicher und zuverlässig arbeitet, weist er doch eine relativ große Gesamtbreite auf; soll diese reduziert werden, so sind Formgebungen erforderlich, die relativ kompliziert geformte Einzelteile und damit einen aufwendigeren Aufbau erfordern.

Da im Zuge der Entwicklung neuer Fahrzeuge immer weniger Raum zwischen den Reifenflanken einerseits und anderen mechanischen Elementen des Fahrzeugs andererseits zur Verfügung steht, so daß für des Anlegen einer Gleitschutzkette auch der Verscluß des inneren Seitenbügels eine möglichst geringe Verschlußbreite (d.h. seitliche Erstreckung von der Reifenflanke weg) aufweisen soll, soll die Erfindung einen Verschluß der vorstehend genannten Art derart weiterentwickeln, daß er eine besonders geringe Breite bei dennoch besonders einfachem Aufbau aufweist. Erfindungsgemäß wird dies bei einem Verschluß der eingangs genannten Art dadurch erreicht, daß jeder Haken als eine in einem Abstand von dem in Schließrichtung vorne liegenden Ende des plattenförmigen Grundkörpers aus diesem schräg entgegen der Schließrichtung des Verschlusses herausgeklappte Zunge ausgebildet ist.

Der erfindungsgemäße Verschluß besteht somit aus zwei plattenförmigen Grundkörpern, deren gesamte Breite (im weiter oben angegebenen Sinne), d.h. deren Erstreckung seitlich von der Reifenflanke weg durch die Dicke des plattenförmigen Grundkörpers und die von diesem vorspringende Zunge bestimmt wird. Da die Zunge schräg vorspringt, ist es nicht mehr, wie beim gattungsgemäßen Verschluß, erforderlich, einen ganzen Abschnitt des Grundkörpers vollständig in Form eines Hakens umzubiegen. Durch die schräg entgegen der Schließrichtung verlaufende Ausbildung der Zunge wird aber gleichzeitig sichergestellt, daß während der Verschließbewegung beim Zusammenlaufen der beiden Grundkörper einer derselben, je nach ihrer relativen Lage zueinander, mit seinem vorderen Ende gegen die schräg angestellte Zunge des anderen anläuft und von dieser seitlich bis zu seinem Eingreifen in die Befestigungsöffnung am anderen Grundkörper abgelenkt wird. Das Anbringen einer schräg vorstehenden Zunge am Grundkörper ist in besonders einfacher Weise möglich, bevorzugt etwa dadurch, daß die Zunge als ein aus dem Grundkörper schräg herausgeklappter Grundkörperabschnitt besteht: hierzu ist es lediglich erforderlich, die Zungenform im Grundkörper vorzustanzen und dann die vorgestanzte Zunge aus dem Grundkörper entsprechend der gewünschten Schräge bzw. schrägen Formgebung herauszuklappen bzw. auszubiegen. Dadurch, daß die Zunge schräg vom Grundkörper vorspringt, wird beim Einführen der Kante der Einhaköffnung im anderen Grundkörper, die gegen die Zunge in Anlagekontakt kommt, auf der Unterseite der Zunge ein gewisser "Einkeil"-Effekt ausgelöst, da diese Kante in dem immer enger werdenden Spalt zwischen der Unterseite der Zunge und der Ebene des Grundkörpers hineingezogen wird, wodurch sich ein etwas sicherer Sitz des Verschlusses und eine bessere Sicherheit gegen ein unerwünschtes Öffnen desselben als bei Einsatz eines reinen auf seiner Innenseite gekrümmten Hakens ergibt, der einen solchen "Keil"-Effekt nicht aufweist, wobei der gewünschte Keil-Effekt einerseits und die Länge der Zunge andererseits durch die Wahl eines geeigneten Anstellwinkels für die Zunge optimiert werden können.

Um im Interesse eines guten Verrastungssitzes eine relativ große Überdeckung im Einhakungsbereich, d.h. zwischen der überstehenden Zunge einerseits und dem anderen Grundkörper andererseits zu erreichen und dennoch eine möglichst geringe Breite des Verschlusses zu erhalten, ist es besonders empfehlenswert, wenn jede Zunge längs eines ersten, vom Grundkörper ausgehenden Zungenabschnitts mit einem Anstellwinkel zur Schließrichtung des Verschlusses versehen ist, der größer ist als der Anstellwinkel eines sich anschließenden zweiten, in das Zungenende auslaufenden Abschnitts der Zunge. Durch diese Ausgestaltung kann durch den stärker ansteigenden ersten Zungenabschnitt auf kurzem Weg der erforderliche Zungenüberstand für das Einführen der Einhaköffnung bzw. deren Rastkante des anderen Grundkörpers gesschaffen werden, wonach sich dann ein zweiter Zu ngenabschnitt anschließt, der im wesentlichen nur mehr einer Überdeckung des eingeführten Abschnitts im Sinne eines guten Haltens dient. Dabei ist der Anstellwinkel des zweiten Abschnitts deutlich geringer als der des ersten Abschnitts, liegt vorzugsweise in einem Bereich zwischen 0° und 20° (relativ zur Verschließrichtung des Verschlusses gesehen), so daß durch diesen zweiten, in das Zungenende auslaufenden Zungenabschnitt eine gute Führung und Abstützung bzw. Halterung des eingeschobenen Abschnitts des anderen Grundkörpers erfolgen kann, ohne daß durch diese Überdeckung die Breite des Verschlusses nennenswert vergrößert würde. Bevorzugt wird der Anstiegswinkel in dem ersten Zungenabschnitt, der direkt vom Grundkörper ausgeht, in einem Bereich von 45° bis 70°, ganz besonders vorzugsweise um 60° gewählt.

Eine sehr vorteilhafte Ausgestaltung des erfindungsgemäßen Verschlusses besteht auch darin, daß beide Endstücke spiegelsymmetrisch zueinander ausgebildet sind, wobei ganz besonders bevorzugt jedes Endstück auch noch zu seiner Längsache symmetrisch gestaltet ist, was es möglicht, identisch zueinander ausgebildete Endstücke zu verwenden.

Bevorzugt wird weiterhin die Form der Zungen so gewählt, daß diese eine sich zu ihrem freien Ende hin laufend verringernde Breite aufweisen, wodurch sichergestellt wird, daß in gerade dem Bereich, der beim Einhaken am stärksten belaster wird (nämlich im anfänglichen Bereich hinter der Vorspringstelle am Grundkörper) die größten Breiten vorliegen, während im Endbereich der Zunge, der nur noch eine überdeckende Haltefunktoin ausübt, bei der keine großen Kräfte wirksam werden, eine abnehmende Breite der Zunge genügt. Die Breitenabnahme kann dabei vorzugsweise so erfolgen, daß (in der Draufsicht auf jede Zunge gesehen, d.h. in einer Blickrichtung senkrecht zum Grundkörper hin) das freie Ende jeder Zunge abgerundet, besonders vorzugsweise ellipsenabschnittförmig gerundet ist. Hierdurch wird nicht nur ein gefälliges Aussehen erreicht, sondern es werden auch unnötige Kanten bzw. Ecken vermieden, die unter ungünstigen Verhältnissen beim Betätigen des Verschlusses zu einer Verletzungsgefahr führen könnten.

Eine ganz besonders vorzugsweise Ausgestaltung des erfindungsgemäßen Verschlusses läßt sich auch dadurch erreichen, daß jeder Grundkörper auf der Seite, auf der seine Zunge ausgeklappt ist, innerhalb des Bereiches, der sich im Schließzustand mit dem anderen Grundkörper überdeckt, an geeigneter Stelle mit einem Permanentmagneten versehen ist, dessen Oberfläche mit der Oberfläche des ihn aufnehmenden Endstücks bündig abschließt. Hierdurch wird noch zusätzlich ein "Anziehungs"-Effekt erreicht, indem im Verschlußzustand die beiden nebeneinanderliegenden Grundkörper durch den Magneten des Grundkörpers, der den Haken für den Einhakvorgang ausbildet, aneinandergezogen und dadurch ein besonders fester Sitz und eine gute Sicherung gegen unerwünschtes Öffnen erzielt wird.

In einer anderen, ebenfalls vorzugsweisen Ausgestaltung der Erfindung kann der Verschluß jedoch auch so ausgebildet sein, daß nur einer der beiden Grundkörper wiederum innerhalb des Bereiches, der sich im Schließzustand mit dem anderen Grundkörper überdeckt, an geeigneter Stelle einen geeigneten Permanentmagneten aufweist, der diesmal in einer durchgehenden Öffnung des ihn aufnehmenden Grundkörpers so befestigt ist, daß er mit seinen beiden Endflächen bündig mit den Oberflächen der beiden Seiten dieses Grundkörpers abschließt. Dieser Magnet kann auf beide Seiten des Grundkörpers wirksam sein, d.h. es ist sichergestellt, daß dieser Magnet ungeachtet der Lage des ihn tragenden Grundkörpers relativ zum anderen Grundkörper (in Verschlußstellung) stets so wirksam ist, daß er die beiden Körper aneinander anzieht.

Die Stelle, von der aus die Zunge jeweils vom entsprechenden Grundkörper schräg nach oben abgeht, kann in jeder gewünschten, geeigneten Position vorgesehen werden. So kann es unter bestimmten Umständen vorteilhaft sein, wenn die Zunge möglichst weit am vorderen Ende des zugehörigen Grundkörpers vorspringt, so daß der Grundkörper an seinem dem anderen Grundkörper zugewendeten Ende gleichsam mit der schräg ansteigenden Zunge "beginnt". Gleichermaßen kann es jedoch auch wünschenswert sein, die Zunge in einem gewissen Abstand vom vorderen Ende des Grundkörpers anzubringen, insbesondere dann, wenn die Zunge – wie geschildert – als einstückiges Element des Grundkörpers selbst aus diesem herausgeklappt wird, weil hierdurch dann ein ausreichend großer Materialquerschnitt zwischen der Einmündungsstelle der Zunge in den Grundkörper und den entsprechenden Enden vorliegt, um nicht ein unerwünschtes Beschädigen der Zunge auszulösen. In diesem Fall kann es ferner vorteilhaft sein, das vordere Ende des Grundkörpers selbst in geeigneter Weise auch über dessen Plattendicke hinweg abzurunden, damit die solchermaßen gegeneinander beim Verschluß anlaufenden vorderen Grundkörperenden sich ebenfalls seitlich ablenken können. Überhaupt ist die Ausbildung desr vorderen Endes jedes Grundkörpers vorzugsweise ebenso wie die der Zunge (in senkrechter Draufsicht auf den Grundkörper gesehen) in Form einer Rundung ausgeführt, um auch hier nicht nur unerwünschte Kanten und damit ausgelöste mögliche Verletzungsgefahren für die Bedienungsperson zu vermeiden, sondern um auch insbesondere beim Zusammenlaufen der Grundkörper während des Verschließvorganges die Möglichkeit auszuschließen, daß die beiden Grundkörper mit ihren vorderen Enden aneinanderliegend zum Stillstand kommen können.

Die Erfindung wird nachfolgend anhand der Zeichnung im Prinzip beispielshalber noch näher erläutert. Es zeigen:

**Fig. 1** einen erfindungsgemäßen Verschluß in Verschließstellung (in perspektivischer Draufsicht);

**Fig. 2** eine Draufsicht auf den in Fig. 1 dargestellten Verschluß (Blickrichtung um 90° gedreht);

**Fig. 3** eine andere Ausführungsform eines erfindungsgemäßen Verschlusses mit Permanentmagneten (in Verschließstellung), und

**Fig. 4** ein Draufsicht auf den in Fig. 3 dargestellten Verschluß (Blickrichtung um 90° gedreht).

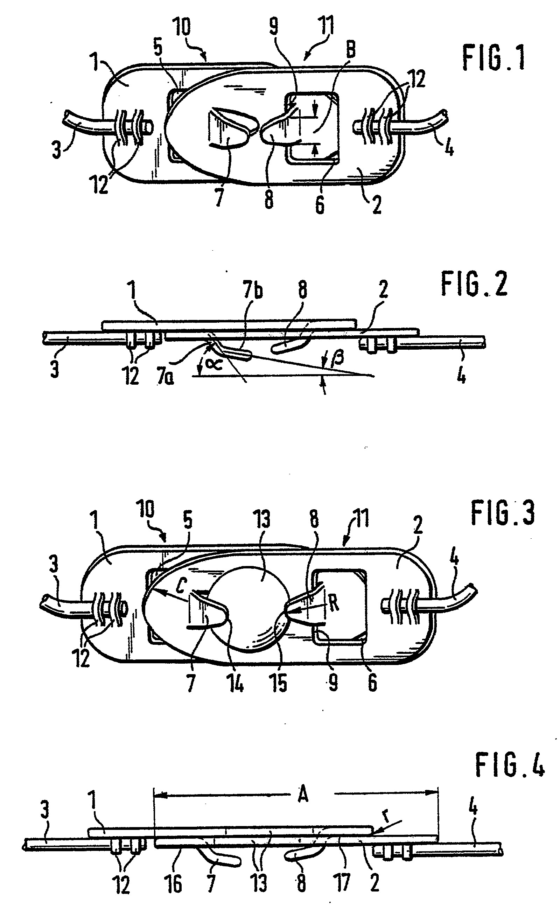

Fig. 1 zeigt einen Verschluß in Verschlußstellung mit zwei Endstücken 10, 11, deren jedes über geeignete Befestigungen 12 an den Enden 3 bzw. 4 von Seitenbügeln von (nicht gezeigten) Gleitschutzketten befestigt ist. Für die Befestigung 12 können dabei alle geeigneten Befestigungsmittel und Befestigungsarten, die dem Fachmann bekannt sind und auf die nicht näher einzugehen ist, eingesetzt werden.

Die beiden Endstücke 10 bzw. 11 weisen jeweils einen plattenförmigen Grundkörper 1 bzw. 2 auf, der an seinem den Befestigungsstellen 12 entgegengesetztem Ende mit einer in Draufsicht abgerundeten, bei den dargestellten Ausführungsbeispielen ovalen Formgebung C versehen ist. In einem gewissen Abstand jeweils von diesem Ende jedes plattenförmigen Grundkörpers 1 bzw. 2 ist eine schräg entgegen der jeweiligen Schließrichtung des betreffenden Endstückes 10 bzw. 11 angestellte Zunge 7 bzw. 8 vorgesehen. Wie die Figuren zeigen, bestehen diese Zungen 7 bzw. 8 aus einem Abschnitt des jeweiligen Grundkörpers 1 bzw. 2, der im Grundkörper vorgestanzt wurde und dann zungenförmig in der dargestellten Art und Weise aus der Ebene des Grundkörpers herausgeklappt bzw. herausgeschwenkt ist. Wie Fig. 2 zeigt, ist dabei die Zunge 7 (gleiches gilt auch für die Zunge 8) zunächst in einem ersten Abschnitt 7a, der unmittelbar von der Stelle der Einmündung in den Grundkörper ausgeht,

unter einem Winkel α angestellt. An diesem ersten Abschnitt 7a schließt sich sodann ein zweiter Zungenabschnitt 7b an, der in das freie Ende der Zunge ausläuft und in einem erheblich kleineren Winkel β angestellt ist, so das sich eine "gestufte" Anstellung gemäß der Darstellung in Fig. 2 ergibt, auf die hier audrücklich verwiesen wird. Der Winkel α liegt dabei vorzugsweise in einem Bereich von etwa 45° bis 75°, während der Winkel β nur in einem Bereich von 0° bis 20° gewält wird.

Wie alle Figuren deutlich darstellen, sind die Zungen 7 bzw. 8 in der Draufsicht so ausgebildet, daß ihre Breite B (vgl. Fig. 1) kontinuierlich bis zum jeweiligen Zungenende 14 bzw. 15 (Fig. 3) abnimmt, wobei jedes Zungenende 14, 15 seinerseits in der Draufsicht abgerundet, vorzugsweise ellipsenabschnittförmig gestaltet ist, wie dies in Fig. 3 durch Pfeil R dargestellt wird.

Die Figuren lassen ferner erkennen, daß neben den Zungen 7, 8 in jedem plattenförmigen Grundkörper 1 bzw. 2 auch jeweils eine Einhaköffnung 5 bzw. 6 ausgebildet ist. In Verschlußstellung tritt dabei die in den Figuren dargestellte Relativlage der beiden Endstücke 10 bzw. 11 auf, wobei jedoch (in Blickrichtung des Betrachters der Figuren gesehen) gleichermaßen auch das Endstück 11 hinten und das Endstück 10 vorne liegen könnte. In jedem Fall ist gewährleistet, daß das hinten liegende Endstück (in den Figuren: das Endstück 10), das an der (nicht gezeigten) Flanke des Reifens liegt, über den die mit diesem Verschluß versehene Gleitschutzkette übergestülpt ist, mit seiner Zunge (im gezeigten Fall: mit der Zunge 8) durch die entsprechende Einhaköffnung 6 des anderen Endstücks 11 hindurchgreift, wodurch dann unter der Öffnungsspannung des Seitenbügels, eine Anlage der der betreffenden Zunge 8 zugewendeten Abschlußkante 9 der Öffnung 6 gegen die Unterseite der Zunge 8 erfolgt und dadurch der gewünschte Verrastungseingriff eintritt.

Bei der in den Fig. 3 und 4 gezeigten Ausführungsform ist zusätzlich zu dem in den Fig. 1 und 2 gezeigten Beispiel auch noch an jedem Endstück 10 bzw. 11 ein Permanentmagnet 13 vorgesehen (in den Flg. 3 und 4 nur bei Endstück 11 dargestellt), und zwar innerhalb des Bereiches A (vgl. Fig. 4), innerhalb dessen sich die beiden Endstücke 10 und 11 in Verschlußstellung überdecken. Die Permanentmagnete 13 sind dabei in einer geeigneten Lage zwischen der jeweiligen Zunge 7 bzw. 8 und der Einhaköffnung 6 des betreffenden Grundkörpers 1 bzw. 2 in eine Aufnahmeöffnung eingelegt und in dieser in geeigneter Weise befestigt (z.B. verklebt). Dabei ist der Permanentmagnet 13 jeweils möglichst nahe an der Stelle, an der die betreffende Zunge 7 bzw. 8 aus der Ebene des Grundkörpers herausläuft, angeordnet, damit in Verschlußstellung gerade im Zungenbereich ein möglichst gutes Anliegen der beiden Endstücke 10 und 11 aneinander bewirkt wird. Dabei sind die Permanentmagneten 13 jeweils so in den betreffenden Grundkörper 1 bzw. 2 eingelassen, daß sie mit ihrer Oberfläche bündig mit der entsprechenden Oberfläche 16 bzw. 17 der beiden plattenförmigen Grundkörper 1 bzw. 2 abschließen und nicht etwa überstehen.

Ferner läßt sich aus Fig. 4 auch noch erkennen, daß die Grundkörper 1 bzw. 2 an ihren freien Enden auch hinsichtlich ihrer Dicke mit einer Abrundung versehen sind, wie überhaupt die Endstücke 10 und 11 eine Ausgestaltung derart aufweisen, daß grundsätzlich Kanten bzw. Ecken vermieden werden.

Die Grundkörper können aus jedem geeigneten Stahlblech, bei entsprechender Dimensionierung aber auch aus Leichtmetall oder anderen geeigneten Materialien gefertigt sein; dem Fachmann sind die verwendbaren Materialien einschlägig bekannt und er wird sie entsprechend auswählen.

**Patentansprüche**

1. Verschluß für auf- und verschließbare Seitenbügel von Gleitschutzketten für Fahrzeugreifen, bei dem an jedem Ende (3; 4) eines Seitenbügels ein Endstück (10; 11) mit einem, im montierten Zustand im wesentlichen parallel zur Seitenflanke des Fahrzeugreifens ausgerichteten plattenförmigen Grundkörper (1; 2) befestigt ist, an dem ein entgegen der Schließrichtung wirksamer Haken (7; 8) ausgebildet und eine Einhaköffnung (5; 6) derart vorgesehen ist, daß der Haken (7; 8) des einen Grundkörpers (1; 2) mit einer Einhaköffnung (5; 6) des anderen Grundkörpers (2; 1) bei Verriegelungsstellung in Wirkeingriff bringbar ist, dadurch gekennzeichnet, daß jeder Haken als eine in einem Abstand von dem in Schließrichtung vorne liegenden Ende des plattenförmigen Grundkörpers (1; 2) aus diesem schräg entgegen der Schließrichtung des Verschlusses herausgeklappte Zunge (7; 8) ausgebildet ist.

2. Verschluß nach Anspruch 1, dadurch gekennzeichnet, daß die Zunge (7) einen ersten vom Grundkörper (1; 2) aus zur Schließrichtung des Verschlusses unter einem ersten Anstellwinkel (α) ansteigenden Abschnitt (7a) aufweist, der in einen zweiten, in das Zungenende auslaufenden Abschnitt (7b) mit einem zweiten, kleineren Anstellwinkel (β) übergeht.

3. Verschluß nach Anspruch 2, dadurch gekennzeichnet, daß der Anstellwinkel (β) des zweiten Abschnitts (7b) der Zunge (7) 0° bis 20° zur Schließrichtung des Verschlusses beträgt.

4. Verschluß nach einem der Ansprüche 1 bis 3, dadurch gekennzeichnet, daß jedes Endstück (10; 11) zu seiner Längsachse symmetrisch ausgebildet ist.

5. Verschluß nach einem der Ansprüche 1 bis 4, dadurch gekennzeichnet, daß beide Endstücke (10; 11) spiegelsymmetrisch zueinander ausgebildet sind.

6. Verschluß nach einem der Ansprüche 1 bis 5, dadurch gekennzeichnet, daß jede Zunge (7; 8) eine sich zu ihrem freien Ende hin laufend verringernde Breite (B) aufweist.

7. Verschluß nach einem der Ansprüche 1 bis 6, dadurch gekennzeichnet, daß das freie Ende (14; 15) jeder Zunge (7; 8) in der Draufsicht abgerundet ist.

8. Verschluß nach Anspruch 7, dadurch gekennzeichnet, daß die Abrundung (R) am freien Ende (14; 15) jeder Zunge (7; 8) elipsenabschnittförmig ausgebildet ist.

9. Verschluß nach einem der Ansprüche 1 bis 8, dadurch gekennzeichnet, daß jeder Grundkörper (1; 2) auf der Seite, auf der die Zunge (11) ausgeklappt ist, innerhalb eines Bereiches (A), der sich im Schließzustand mit dem anderen Grundkörper (2; 1) überdeckt, mit einem Permanentmagneten (13) versehen ist, dessen Oberfläche mit der Oberfläche (16) des ihn aufnehmenden Endstückes (11) bündig abschließt.

10. Verschluß nach einem der Ansprüche 1 bis 8, dadurch gekennzeichnet, daß nur ein Grundkörper (2) innerhalb eines Bereiches (A), der sich im Schließzustand mit dem anderen Grundkörper (1) überdeckt, einen Permanentmagneten (13) aufweist, der in einer Öffnung des ihn aufnehmenden Grundkörpers (2) befestigt ist und mit seinen beiden Endflächen mit den Oberflächen (16, 17) beider Seiten dieses Grundkörpers (2) bündig abschließt.

**Claims**

1. Closure for opening and closing side rings of chains for vehicle tyres in which fastened to each end (3; 4) of a side ring there is an end member (10; 11) with a plate-shaped base body (1; 2) which, in the installed state, is aligned substantially parallel to the side flank of the vehicle tyre and on which a hook (7; 8) acting against the closing direction is formed and a hooking opening (5; 6) is so provided that the hook (7; 8) of the one base body (1; 2) may be brought into operative engagement with a hooking opening (5; 6) of the other base body (2; 1) in the locked position, characterised in that each hook is constructed as a tongue (7; 8) spaced from the front end of the plateshaped base body (1; 2) in the closing direction and bent obliquely out of it against the closing direction of the closure.

2. Closure as claimed in claim 1, characterised in that the tongue (7) has a first section (7a) inclined to the base body (1; 2) at a first angle of inclination (α) to the closing direction of the closure, which section merges into a second section (7b) with a second, smaller angle of inclination (β) terminating in the tongue end.

3. Closure as claimed in claim 2, characterised in that the angle of inclination (β) of the second section (7b) of the tongue (7) is 0° to 20° to the closing direction of the closure.

4. Closure as claimed in one of claims 1 to 3, characterised in that each end member (10; 11) is constructed symmetrical to its longitudinal axis.

5. Closure as claimed in one of claims 1 to 4, characterised in that both end members (10; 11) are constructed mirror symmetrical to one another.

6. Closure as claimed in one of claims 1 to 5, characterised in that each tongue (7; 8) has a reducing breadth (B) towards its free end.

7. Closure as claimed in one of claims 1 to 6, characterised in that the free end (14; 15) of each tongue (7; 8) is rounded in plan view.

8. Closure as claimed in claim 7, characterised in that the rounding (R) at the free end (14; 15) of each tongue (7; 8) is constructed in the shape of a portion of an ellipse.

9. Closure as claimed in one of claims 1 to 8, characterised in that each base body (1; 2) is provided on the side on which the tongue (11) is folded out with a permanent magnet (13) within a region (A) which in the closed state overlaps with the other base body (2; 1), the surface of which magnet terminates flush with the surface (16) of the end member (11) receiving it.

10. Closure as claimed in one of claims 1 to 8, characterised in that only one base body (2) has a permanent magnet (13) within a region (A) which in the closed state overlaps with the other base body (1), which magnet is secured in an opening in the base body (2) receiving it and whose two end surfaces terminate flush with the surfaces (16; 17) of both sides of this base body (2).

## Revendications

1. Fermeture pour étrier latéral ouvrable et refermable de chaînes antidérapage de pneumatiques de véhicules, dans lequel, à chaque extrémité (3; 4) d'un étrier latéral, est fixée une pièce d'extrémité (10; 11) comportant un corps de base (1; 2) en forme de plaque qui est aligné sensiblement parallèlement au flanc latéral du pneumatique de véhicule lorsqu'il est à l'état monté, corps de base sur lequel est réalisé un crochet (7; 8) agissant dans le sens inverse de la fermeture et un orifice d'accrochage (5; 6) étant prévu, de façon que le crochet (7; 8) de l'un des corps de base soit placé en prise fonctionnelle, en position de verrouillage, avec un orifice d'accrochage (5; 6) de l'autre corps de base (2; 1), caractérisée en ce que chaque crochet est réalisé sous la forme d'une languette (7; 8) qui est placée à distance de l'extrémité du corps de base (1; 2) en forme de plaque qui est placée à l'avant dans le sens de la fermeture et qui est rabattue en biais en s'éloignant du corps de base (1; 2), dans le sens inverse du sens de fermeture de la fermeture.

2. Fermeture selon la revendication 1, caractérisée en ce que la languette (7) présente une première partie (7a) allant en montant du corps de base (1; 2), dans le sens de fermeture, en faisant un premier angle d'inclinaison (α), partie (7a) qui se transforme en une deuxième partie (7b) terminant l'extrémité de la languette, avec un deuxième angle d'inclinaison (β), plus petit.

3. Fermeture selon la revendication 2, caractérisée en ce que l'angle d'inclinaison (β) de la deuxième partie (7b) de la languette (7) est compris entre 0° et 20°, par rapport au sens de fermeture de la fermeture.

4. Fermeture selon l'une des revendications 1 à 3, caractérisée en ce que chaque pièce d'extrémité (10; 11) est réalisée symétrique par rapport à son axe longitudinal.

5. Fermeture selon l'une des revendications 1 à 4, caractérisée en ce que les deux pièces d'extrémité (10; 11) sont réalisée selon une symétrie spéculaire réciproque.

6. Fermeture selon l'une des revendications 1 à 5, caractérisée en ce que chaque languette (7; 8) présente une largeur (B) se déduisant de manière continue an allant vers son extrémité libre.

7. Fermeture selon l'une des revendications 1 à 6, caractérisée en ce que l'extrémité libre (14; 15) de chaque languette (7; 8) est arrondie en vue de dessus.

8. Fermeture selon la revendication 7, caractérisée en ce que l'arrondi (R) pratiqué à l'extrémité libre (14; 15) de chaque languette (7; 8) est réalisée en forme de secteur d'ellipse.

9. Fermeture selon l'une des revendications 1 à 8, caractérisée en ce que chaque corps de base (1; 2) est pourvu, du côté sur lequel la languette (11) est rabattue, à l'intérieur d'une zone (A) se recouvrant à l'état de fermeture avec l'autre corps de base (2; 1), d'aimants permanents (13) dont la surface se raccorde avec affleurement à la surface (16) de la pièce d'extrémité (11) qui le loge.

10. Fermeture selon l'une des revendications 1 à 8, caractérisée en ce que seul un corps de base (2), à l'intérieur d'une zone (A) qui se recouvre, à l'état fermé, avec l'autre corps de base (1), présente un aimant permanent (13) qui est fixé dans une ouverture du corps de base (2) qui le loge et qui se raccorde avec affleurement, par ses deux faces d'extrémités, aux surfaces (16, 17) de ce corps de base (2).

EP 0 242 435 B1

FIG.1

FIG.2

FIG.3

FIG.4